# EUROPÄISCHE PATENTSCHRIFT

(11) **EP 0 938 641 B1**
(45) Veröffentlichungstag und Bekanntmachung des Hinweises auf die Patenterteilung: **20.02.2002**
(21) Anmeldenummer: 97952772.8
(22) Anmeldetag: 12.11.1997
(51) Int. Cl.: G01B 5/008, G01B 21/04

(54) **POSITIONIERVERFAHREN UND POSITIONIERSYSTEM**
POSITIONING PROCESS AND SYSTEM
PROCEDE ET SYSTEME DE POSITIONNEMENT

(30) Priorität: 12.11.1996 DE 19648864
(43) Veröffentlichungstag der Anmeldung: 01.09.1999
(73) Patentinhaber: Piko, Helmut, 15732 Waltersdorf (DE); Zunker, Thorsten, 12355 Berlin (DE)
(72) Erfinder: Piko, Helmut, 15732 Waltersdorf (DE); Zunker, Thorsten, 12355 Berlin (DE)
(74) Vertreter: Effert, Bressel und Kollegen
(86) Internationale Anmeldenummer: EP9706389
(87) Internationale Veröffentlichungsnummer: WO9821545

(56) Entgegenhaltungen:
- DE-A- 1 402 895
- DE-A- 19 510 456
- DE-A- 19 640 579
- FR-A- 2 693 148
- GB-A- 2 268 894
- GB-A- 2 310 929
- US-A- 4 848 005

## Beschreibung

Die Erfindung betrifft eine Verfahren und eine Vorrichtung zur Positionierung einer Spannvorrichtung für Werkstücke innerhalb eines vorgegebenen Arbeitsraumes.

Die Erfindung wird im folgenden im wesentlichen anhand einer Meßmaschine und ein dafür vorgesehenes Positionier- und Spannsystem beschrieben, ist jedoch nicht auf derartige Meßmaschinen beschränkt, sondern in gleicher Weise verwendbar für Positioniersysteme mit Hilfe dreiachsig ansteuerbarer Robotersysteme für ein Werkzeug. Insoweit ist das System sowohl für Meßmaschinen als auch Bearbeitungsmaschinen geeignet.

Werkstücke beliebiger Kontur müssen für deren exakte Vermessung oder Bearbeitung innerhalb eines bestimmten dreidimensionalen Raumes, weiches der Reichweite des Meßsystemes bzw. der Bearbeitungseinrichtung entspricht temporär fixiert werden.
Bei Meßmaschinen wird dieser Raum von einer Meßplatte, einem Meßtisch oder einer Aufspannplatte in der Ebene begrenzt und die dritte Dimension von der Reichweite des Meßtasters an einer Meßbrücke oder einem Meßgalgen bestimmt (DE-AS 22 32 858 und DE 37 17 541 A1).

Als Spannvorrichtungen oder Auflagesäulen für das Werkstück dienen verstellbare Säulen, die auf der Aufspannplatte punktgenau arretiert werden können. Dazu gehören Vorrichtungen, wie sie z.B. aus der DE 44 24 765 A1 oder US 4 848 005 bekannt sind.

Eine komplette von Software gesteuerte Meßmaschine "TYPHOON" mit "Five-Unique"-Aufspannvorrichtung ist in einem gleichnamigen Prospekt der Firma DEA-Brown-Sharpe SpA. Moncalieri, IT veröffentlicht worden.

Mit Hilfe der Meßmaschinen oder des Meßroboters wird ein Referenzpunkt entsprechend einem Aufspannpunkt des Werkstückes in dem das Werkstück umgebenden dreidimensionalen Meßraum angefahren. Unter diesen Aufspannpunkt wird dann eine Stütze oder Spannsäule, die auf dem Meßtisch fixierbar ist, gesetzt, in der Regel durch möglichst exaktes manuelles oder maschinelles (US 4 848 005) Verschieben der Säule in horizontaler Ebene (XY-Achse) und vertikales Justieren von deren Höhe (Z-Achse). In gleicher Weise werden die anderen Aufspannpunkte gefunden und fixiert.

Als Hilfsmittel dient ein CAD-Programm oder eine Zeichnung des Werkstückes, welche für die Softwareverarbeitung in der Meßmaschine aufbereitet werden. Additiv wird der Meßstab oder Taster der Meßmaschine durch eine abnehmbare Zentriervorrichtung ersetzt, die am Aufspannpunkt der zu positionierenden Säule als komplementärer, simulierter Werkstückpunkt dient. Die Zentriervorrichtung weist ein Koppelelement, z.B. einen Greifer oder eine Kugelfalle auf, um die zu positionierende Säule formschlüssig ankoppeln zu können. Dieses aufwendige Positionierverfahren ist detailliert in DE 195 10 456 A1 beschrieben, ebenso einige für die Fixierung der Werkstücke verwendbare Spanneinrichtungen.

Für die Positionierung von Bauteilen unter definierten Winkeln in einer Ebene sind auch Drehtische mit Positioniergenauigkeiten unter +/- 0,05 ° absoluter Genauigkeit bekannt, die mit Schrittmotoren oder Servomotoren ausgestattet sind. Die Positioniergenauigkeit wird mittels Endschaltern erreicht, die den Hall-Effekt nutzen. Derartige Drehtische mit der Typenbezeichnung RTM offeriert die Firma Spindler & Hoyer GmbH & Co, Göttingen, DE.

Für die automatisierte Erfassung einzelner Meßpunkte auch sehr großer Teile können auf einer Meßplatte bewegliche Meßsäulen gemäß EP- B-0 216 041 verwendet werden.

Mit den zitierten Systemen ist es nicht möglich, eine Auflagefläche beliebiger Lage und Ausdehnung im 3-D-Meßraum, d.h. Arbeitsraum zu simulieren oder für eine derartige Auflagefläche eine Säule mit ebener oder gekrümmter Aufspannfläche oder sonst räumlicher Aufspannfläche bereit zu stellen; zumindestens dann nicht, wenn die Lage der Fläche im Raum eine beliebigen Raumwinkel einnimmt, der von den bei Rastersystemen standardisierten Winkeln, wie 15°, 30°, 45° usw. abweicht.

Letztlich ist aus der GB-A 2268894 ein Werkstückhalter bekannt, der auf dem Tisch einer Werkzeugmaschine angeordnet ist und mit dem Werkstücke zur Bearbeitung von einer Winkelposition in eine andere geschwenkt werden können. Die Möglichkeit, die Lage der Aufspannfläche zur Spindel auszurichten, ist nicht gegeben, ebenso ist naturgemäß die Ausdehnung und Anordnung des Werkstückes relativ zur Spindellage begrenzt.

Bezüglich der Einzelheiten der Spannelemente, Zentrierkugeln und sonstiger Einzelheiten der Meßmaschine, Meßplatte und Säulen für die Werkstückabstützungen und deren Funktion wird auf hier zitierten Publikationen verwiesen und deren Beschreibung durch Zitat in die Offenbarung dieser Erfindung einbezogen. Dies gilt soweit nicht andere Systeme hier vorzugsweise beschrieben werden.

Von daher liegt der Erfindung das Problem zugrunde, eine beliebige Spannfläche oder mehrdimensionale Aufspann- und Positioniervorrichtung innerhalb des Arbeitsraumes bereitzustellen, um eine mehrdimensionale Aufspannfläche oder entsprechend angeordnete Aufspannpunkte für Werkstücke auf einer entsprechenden Positioniervorrichtung anordnen zu können.

Das Problem wird durch die Ansprüche 1, 6 und 13 gelöst. Weiterbildungen der Erfindung sind in den Unteransprüchen erfaßt.

Die Erfindung geht von der Überlegung aus, daß mit den bisherigen Verfahren und Positioniersystemen automatischer oder manueller Art nur Punktauflagen oder konkrete Punkte zur Werkstückunterstützung exakt positionierbar sind. In manchen Fällen ist die Fläche am Werkstück, die der Auflage des Werkstückes dient oder mit der das Werkstück an weiteren Teilen zu befestigen ist, nicht eben oder hat im Arbeitsraum, dessen Koordinaten bekannt sind, keine waagerechte Ausdehnung. In diesen Fällen, z.B. bei beliebigem Raumwinkel einer Auflagefläche ist eine punktförmige Unterstützung des Werkstückes ungenau oder führt zu einer ungenauen temporären Einspannung des

Werkstückes. Hier galt es eine wirtschaftliche, einfache und kostengünstige Lösung zu finden unter Verwendung der bisher üblichen Robotersysteme oder Meßmaschinen, insbesondere eine Anordnung für das Vermessen von Werkstücken.
Nach dem Stand der Technik muß für eine räumlich angeordnete Auflagefläche des Werkstückes eine spezielle Stützeinrichtung angefertigt werden, die auf den punktförmigen Stützen, speziell Stützsäulen auf Basisplatten von Meßmaschinen aufsetzbar war. Problematisch ist dabei unter anderem die exakte Fertigung dieser Stützeinrichtung, die unter Umständen nur einmal verwendbar ist. Große Probleme bereiten auch prismatische Werkstücke oder rohrförmige Werkstücke oder ähnlich geformte Teile an Werkstücken, die in beliebiger Achslage unter einer nur aus dem fertigen Produkt her bekannten räumlichen Lage temporär für das Vermessen zu positionieren sind oder Vorrichtungen für Meßverfahren, die einen gezielten Abstand zwischen einer Stützeinrichtung und dem Werkstück verlangen, um mittels Spion eine gleichmäßige Außenkontur des Werkstückes feststellen zu können.

Davon ausgehend wurde ein Verfahren zur genauen Positionierung von Vorrichtungen, wie Stützsäulen und ähnliches zur temporären Fixierung des Werkstückes in einem bekannten dreidimensionalen Arbeitsraum entwickelt. Dabei wird vorausgesetzt, daß das Werkstück eine mehrdimensionale, d.h. räumlich beliebig angeordnete Auflage benötigt und das Werkzeug oder ein Meßkopf mit Meßtaster alle Koordinatenpunkte anfahren kann und die Maschine mit einem Rechner ausgestattet ist, wie dies insbesondere bei 3-D-Meßmaschinen der Fall ist. Die von der Meßmaschine zu Verfügung gestellten Einrichtungen, wie Kollisionsschutz oder Übertragung elektrischer Steuer- oder Leistungssignale sind bei der hier vorgeschlagenen Lösung nutzbar, indem sie über ein entsprechendes Kupplungssystem an dem Kopf der Maschine, z.B. dem Meßkopf eingesetzt werden, beispielsweise als Austauschelement für den Meßtaster. Gegenüber dieser Meßmaschine oder Bearbeitungsmaschine, darunter wird z.B. eine Schleifvorrichtung oder ein Schleifwerkzeug und ähnliches, wie z.B. auch ein Erodierwerkzeug verstanden, liegt in der Regel eine Basisplatte z.B. der Meßplatte der Meßmaschineund darauf eine höhenverstellbare und frei in X- und Y-Achse bewegliche Vorrichtung, meist auch als Stützsäulen bezeichnet. Diese Stützsäulen werden bei dem Stand der Technik in der Regel mit kugelförmigen oder ähnlichen Köpfen versehen, damit dort das Werkstück aufgelegt werden kann.
Bei der erfindungsgemäßen Lösung ist es natürlich auch möglich, derartige Kugeln oder standardisierte Auflagepunkte zu verwenden, wenn nicht erfindungsgemäß eine besondere Stützeinrichtung Verwendung finden soll, die der mehrdimensionalen beliebigen Raumlage des Werkstückes Rechnung trägt. Erfindungsgemäß wird die Stützsäule oder ähnliche Vorrichtung mit einer ersten Kupplung und das Werkzeug, d.h. der Kopf der Maschine mit einem entsprechenden Adapter mit einer zweiten Kupplung bestückt und rotatorisch um 360° beweglich verbunden. Jede dieser Kupplungen besteht aus mindestens zwei Koppelteilen, welche durch feststellbare, schwenkbewegliche Zwischengelenke verbunden sind und wobei beide Kupplungen temporär indirekt miteinander koppelbar sind. Diese Kopplung kann durch ein Distanzstück zwischen den frei beweglichen Koppelteilen der Vorrichtung bzw. des Werkzeuges geschehen oder die Koppelteile bestehen an ihren freien Enden aus Magneten, z.B. Magnetplatten, die so die Kupplungen der Vorrichtung und des Werkzeuges indirekt miteinander koppeln können.

Es wird unterstellt, daß die Werkstückkonfiguration als Zeichnung oder CAD-Programm verfügbar ist und auch die Raumlage der Auflageflächen des Werkstückes mit Hilfe der Maschine in Koordinatenpunkte umrechenbar sind. Die so ermittelte mehrdimensionale Auflage wird auf das Koordinatensystem des Arbeitsraumes transponiert und sodann zu der mehrdimensionalen Auflage eine rechnerische Referenzebene der Auflage ermittelt. Diese Referenzebene dient dazu, eine diese Ebene schneidende Achse zu fixieren, nach der sich das gesamte Positioniersystem richten kann. Die äußeren Koppelteile am Werkzeug werden dann durch Festsetzen des Zwischengelenkes in Richtung der schneidenden Achse ausgerichtet und fixiert und das Werkzeug auf die rechnerisch ermittelte schneidende Achse im Arbeitsraum mit definierten Abstand zu der Referenzebene verfahren. Dieser definierte Abstand dient dazu, ein Distanzstück für dieKopplung mit der nunmehr auf die Referenzebene auszurichtenden Stützsäule aufzunehmen und gegebenenfalls eine Spanneinrichtung und eine Stützeinrichtung auf der Stützsäule zu positionieren. Nachdem eine Stützsäule grob in X- Y-Position vorjustiert wurde und sodann die Höhenlage (Z-Achse) des entsprechenden Koppelteiles für die später zu montierende Stützvorrichtung ausgerichtet wurde, werden die benachbarten Koppelteile der Vorrichtung und des Werkzeuges achsengetreu ausgerichtet und dann zu einander fixiert. Diese Fixierung kann durch Zwischenkoppeln eines Distanzstückes bekannter Länge geschehen, wobei gleichzeitig Winkeldifferenzen zur exakten Justierung der Stützsäulen ausgeglichen werden können.
Andererseits ist es möglich, daß die freien Enden der Koppelteile der Kupplungen mit Magnetelementen ausgerüstet sind, die dann in der Lage der schneidenden Achse temporär durch Magnetkräfte miteinander gekuppelt werden.
Nachdem diese Feinjustierung und Ausrichtung der Stützsäule oder Vorrichtung auf der Basisplatte vorgenommen wurde, wird die Vorrichtung sowohl auf der Basisplatte, als auch in ihrer Höhenlage festgesetzt. Sodann können die Kupplungen der Vorrichtung und des Werkzeuges vom den Distanzstück entkuppelt werden und in das nunmehr frei gewordene Koppelteil der Vorrichtung oder Stützsäule kann eine zur Auflage des Werkstückes komplementäre Stützeinrichtung eingefügt und festgesetzt werden. Zu beachten ist dabei, daß sowohl das Distanzstück als auch die Koppelteile sehr exakt gefertigt werden und möglichst wenig Spiel aufweisen, damit eine Wiederholgenauigkeit von < als 0,1 mm absolut garantiert werden kann. Das Werkstück, z.B. ein Spritzgußteil kann in der Regel mit derartigen engen Toleranzen gefertigt werden, so daß natürlich auch eine entsprechende Meßmaschine oder Bearbeitungsvorrichtung mit ähnlich engen Toleranzen fertig werden muß.

Zur Vereinfachung und Übersichtlichkeit der verwendeten Verfahrensweisen und Vorrichtungsteile wird im folgenden bei dem Positionierverfahren und Positioniersystem nur von einer 3-D-Meßmaschine und einem, in dem innerhalb der Reichweite der Meßmaschine angeordneten Raum positionierten Werkstück ausgegangen, das mit entsprechenden, für sich bekannten, Stützsäulen gehalten wird. Bei Verwendung des Systems mit anderen Maschinen kann der Fachmann den Vorgang und die Vorrichtungen entsprechend anpassen. Idealerweise ist die Zahl der Bauteile, der zu verwendenden Positionierelemente so gering wie möglich zu halten, einmal aus Kostengründen und zum anderen, um eine Addition der Ungenauigkeiten zu größeren Postionierungenauigkeiten oder Meßungenauigkeiten zu vermeiden. Eine der erfindungsgemäß zu verwendenden Kupplungen sowohl am Kopf der Meßmaschine, eingesetzt in die Vorrichtung, die für den Taster Verwendung findet, und am Kopf der Stützsäule besteht im wesentlichen nur aus den Elementen, Adapter für die Ankopplung an die Maschine bzw. die Basis der Stützsäule, ein Zwischenglied, das eine Bewegung der Kupplung um 360° ermöglicht, diesen Freiheitsgrad in der X-Y-Achse jedoch mit beliebigem Winkeleinschlag fixieren kann, ein an diese Koppelteil der Kupplung schwenkbeweglich anzuordnendes zweites Koppelteil, welches gegenüber dem ersten Koppelteil in einer vertikalen Ebene zu dessen Achse um etwas mehr als +/- 90° schwenkbeweglich gehaltert wird und die dazu erforderliche Schwenkachse ebenfalls in einer vordefinierbaren Winkelstellung festsetzbar ist. Letztlich wird an diesem zweiten Koppelteil noch ein, an dessen freien Ende angeordnetes, Fixierelement benötigt, um eine Ausrichtung des komplementären Koppelteiles an der Kupplung der Stützsäule unter definierter Winkellage halten zu können. Eine derartige Fixierung kann eine Hülse sein, die ein definiertes, von der Länge her bekanntes Distanzstück zwischen den beiden freien Koppelteilen erfaßt oder es kann eine Magnethalterung sein, so daß die Koppelteile gegeneinander magnetisch koppelbar sind. Als Distanzstück kann z.B. eine genau bemessene zylindrische Säule Verwendung finden, die beidendig mit Ringnuten versehen ist, an der entsprechende Feststelleinrichtungen der Koppelteile dieses Distanzstück halten können. Idealerweise besteht das erste Koppelteil und der Adapter aus einem Schrittmotor oder Servomotor, bei dem sich eine Scheibe gegenüber einer zweiten Scheibe rotatorisch um einen voreinstellbaren Winkelgrad, z.B. entsprechend einem elektrischen Signal generiert im Rechner der Meßmaschine, drehen kann. Dieser Schrittmotor wird an seinem der Maschine abgewandten Ende mit einem Gabelstück versehen, wobei das Gabelstück an seinen Enden eine Schwenkachse aufweist, die einen zweiten, ähnlich wie der erste Schrittmotor gestalteten, Motor schwenkbeweglich aufnimmt. Dieser Motor ist um die Schwenkachse zwischen den Gabelenden schwenkbeweglich angeordnet und trägt an seinem freien Ende eine Magnetplatte, z.B. einen Permanentmagneten oder auch einen Elektromagneten. Wenn die Stütze in gleicher Weise ausgerüstet ist, können die Magnete miteinander gekoppelt werden, so daß sich die geschwenkten Motore entlang der berechneten schneidenden Achse unter dem vordefinierten Winkel aneinander koppeln. In dieser Lage können dann die Gelenke der Kupplungen fixiert werden und die Magnethalterung wird dann getrennt. Da die Meßmaschine den richtigen Koordinatenpunkt angesteuert hat, ist die Stützsäule nach dem Vorjustieren in eine Position gebracht worden, so daß der schwenkbewegliche Motor auf der Stützsäule nach dem Koppeln mit dem Gegenstück in der richtigen Position liegt, um ein Werkstück an der gewünschten Stelle mit der gewünschten Lage der Auflagefläche abstützen kann. Gegebenenfalls wird auf die Magnetplatte noch eine Stützeinrichtung gesetzt, die der Kontur des Werkstückes angepaßt ist und eine mögliche Distanz zwischen der Stützsäulenreichweite und dem tatsächlichen Auflagepunkt des Werkstückes überbrückt.

Sofern für die Stützsäule und/oder für den Meßkopf keine derartigen Schrittmotore einsetzbar sind, beispielsweise weil diese zu teuer sind oder zu schwer sind, kann eine Hilfsvorrichtung, eine Justiervorrichtung benutzt werden, die an einem wählbaren Referenzort oder Referenzpunkt im Arbeitsraum auf der Basisplatte positioniert ist. Eine derartige Justiervorrichtung könnte dann, wie die bewegliche Stützsäule mit entsprechenden Schrittmotoren ausgestattet sein, während die Stützsäulen und die Meßmaschine selbst manuelle Kupplungssysteme haben.
In diesem Fall wird zunächst die Meßmaschine, wie zuvor beschrieben, dazu benutzt die Lage des Werkstücks im Arbeitsraum zu ermitteln, eine Referenzebene zu berechnen und eine die Referenzebene schneidende Achse zu bestimmen. Nunmehr wird die Justiervorrichtung entsprechend voreingestellt, indem die Schrittmotore auf die Winkellage komplementär zur Werkstücklage bzw. dessen Referenzebene und der schneidenden Achse verfahren wird. In einem weiteren Schritt wird eine der beschriebenen Kupplungen, jedoch in manuell zu bedienender Ausführung, anstelle des Meßtasters im Meßkopf der Meßmaschine positioniert. Dieser Meßkopf wird dann zu einem Referenzpunkt des Arbeitsraumes verfahren, der in definiertem Abstand zu der Kopffläche des schwenkbeweglichen Motors der Justiervorrichtung liegt. Dabei wird die Lage der schneidenden Achse an dem Referenzpunkt angefahren und sodann die Kupplung am Meßkopf manuell mit der Justiervorrichtung verbunden und anschließend die Kupplung, d.h. deren Schwenk- und Drehachse fixiert, so daß die Kupplung am Meßpunkt keine rotatorischen Freiheitsgrade mehr hat. Nach dieser Vorjustierung der Kupplung wird dann der Meßkopf an den Sollort im Arbeitsraum verfahren und die Stützsäule, wie zuvor beschreiben, dort positioniert, indem die Kupplungen miteinander verbunden werden und so auch an der Stützvorrichtung die schneidende Achse in ihrer X-Y-Z-Achsenlage fixiert wird. Sodann werden die Kupplungen manuell entkoppelt und in das freie Koppelende der Stützsäule die Stützeinrichtung für das Werkstück eingesetzt.

Falls eine derartige Justiervorrichtung ebenfalls nicht verwendbar ist, z.B. weil die Basisplatte sehr klein ist oder die Schrittmotoren noch zu teuer sind, so kann auch hier die Justiervorrichtung mit einer manuellen Kuppelvorrichtung ausgestattet werden, entweder nach Art der Kupplungen, die auch an der Stützsäule oder an dem Meßkopf vorhanden sind oder indem die Justiervorrichtung lediglich aus einem Referenzsockel besteht, der in zwei oder vier Referenzrichtungen Referenzkugeln trägt, die von einer Zentriereinrichtung nach Art einer Überwurfverbindung mit einem anzukoppelnden Distanzstück zum Meßkopf verbindbar sind. Dabei fährt die Meßmaschine, wie zuvor geschildert, den Referenzpunkt zu der Justiervorrichtung an und sodann wird das, an der Referenzkugel mit Spiel aber formschlüsig angeordnete, Zentrierelement mit der Überwurfverbindung mittels eines Distanzstückes mit der manuellen Kupplung der Meßmaschine gekoppelt und wiederum an der Meßmaschine durch entsprechende Feststelleinrichtungen der rotatorische Freiheitsgrad und der Schwenkfreiheitsgrad gesperrt. Danach kann, wie zuvor beschrieben, die Stützsäule eingerichtet werden nach dem Muster der Achsenneigung an der Kupplung des Meßkopfes.

Je nach gewünschtem Automatisierungsgrad oder Aufwand für derartige erfindungsgemäße Positioniersysteme kann sowohl der Meßmaschinenkopf, die Stützsäule und/oder eine Justiervorrichtung mit elektrisch oder manuell verstellbarer und arretierbarer Kupplung versehen werden und die erforderlichen Winkeleinstellungen an den Kupplungen manuell oder elektrisch gesteuert vorgenommen werden. In allen Fällen ist jedoch zunächst eine Referenzebene oder Fläche zu der Werkstückauflage im Abstand zu den vertikalen Achsen der Stützsäule bzw der Justiereinrichtung einerseits und des Meßkopfes andererseits zu definieren, entsprechend den geometrischen Abmessungen der zu verwendenden Stützsäulen und Stützeinrichtungen und bezogen auf die schneidende Achse, welche im einfachsten Falle orthogonal zu der Referenzebene liegt. Die rechtwinklige Achsenlage (zu einer Referenzebene mittig zwischen den vertikalen Achsen) ergibt sich bei der Verwendung von Distanzstücken mit parallelen Ringnuten und manuell zu bedienenden Kupplungen gleicher Bauart von selbst.

Das in die Stützsäule einzusetzende Stützelement oder die Stützeinrichtung für das Werkstück hat gegenüber der Stützsäule eine zu einer Fläche der Stützsäule planparallele Referenzebene, z.B. die Oberseite der Stützeinrichtung, so daß bei manueller Variation der Stützeinrichtung diese nicht aus der gewünschten räumlichen Lage gedreht wird oder gekippt wird.

In einer besonderen Ausführungsform der Stützeinrichtung kann diese mit einer komplementären Oberfläche zur Werkstückoberfläche versehen sein, jedoch bekommt diese Stützeinrichtung noch einen weiteren rotatorischen Freiheitsgrad, um eine gegenüber der Referenzebene abweichende Werkstückkontur berücksichtigen zu können. Dies ist insbesondere sinnvoll bei der Positionierung von Werkstücken, die Rohrleitungen oder ähnliche, nicht flächige Auflagekanten haben und daher die Stützeinrichtung als Mehrpunktunterstützung auszuführen ist. Gleiches könnte sein, wenn die Werkstückoberfläche an der Auflagestelle mit einer dreidimensionalen Struktur versehen ist und die Oberfläche der Stützeinrichtung in gleicher Weise auszurichten ist. Falls die Oberfläche der Stützeinrichtung dazu zu verschwenken ist, wird an der Stützeinrichtung selbst ein Lager mit rotatorischem Freiheitsgrad angeordnet, gegebenenfalls mit einer Anzeige für die Winkellage oder das Bogenmaß.

Bei der Verwendung nichtmagnetischer Koppelteile für das zuvor beschriebene Distanzstück oder die Stützeinrichtungen ist es erforderlich, diese exakt zu führen, was geeigneterweise mit einer entsprechenden Ausbildung des freien Ende des Koppelteils der jeweiligen Kupplung geschieht. Da das Distanzstück selbst ein Fixmaß haben soll, können dort keine verstellbaren Koppelelemente angebracht werden. Aus diesem Grund muß mindestens die Kupplung der Stützsäule oder die Kupplung am Meßkopf mit einer, das Distanzstück übergreifenden Hülse oder ähnlich wirkenden Elementen ausgestattet sein, um das Distanzstück ein- und auskuppeln zu können. Damit die exakten Abstände zwischen den Kupplungsteilen wiederholgenau justierbar sind, kann das Distanzstück vorzugsweise mit Ringnuten versehen sein, in denen Feststelleinrichtungen der in das Distanzstück zu schiebenden Hülsen oder Koppelteile genau fixierbar sind. In Richtung der schneidenden Achse wird das Distanzstück durch entsprechende Zentrierungen innerhalb der Kupplungsteile mittig gehalten.

Die weiteren Vorteile und Einzelheiten der erfindungsgemäßen Vorrichtung und des Positionierverfahrens ergeben sich aus der folgenden Beschreibung anhand von Ausführungsbeispielen. Mit der so ausgestatteten Meßmaschine kann eine Meßpunkt oder eine Meßfläche mit einer Genauigkeit von weniger als 0,1 mm angefahren und das Werkstück entsprechend genau positioniert werden.

Anhand einer teils schematische und teils konkretisierten Zeichnung wird die Erfindung im folgenden näher beschrieben. Es zeigen:
- Figur 1: eine Positioniervorrichtung mit Justiervorrichtung, Werkzeug und Distanzstück;
- Figur 2: Positioniervorrichtung mit einer Stützsäule als höhenverstellbare Vorrichtung sowie ein Werkzeug und Distanzstück gemäß Figur 1;
- Figur 3: die Vorrichtung gemäß Figur 2 in gekuppeltem Zustand;
- Figur 4: die Vorrichtung gemäß Figur 2 nach Fixieren der Stützsäule;
- Figur 5: eine Stützsäule mit einzusetzender Stützeinrichtung;
- Figur 6: eine zweite Form der Justiervorrichtung und eine zweite Form des Werkzeuges;
- Figur 7: eine dritte Form der Justiervorrichtung oder Stützsäule;
- Figur 8 a: eine konkretisierte Form der Justiervorrichtung gemäß Figur 1 im Schnitt;

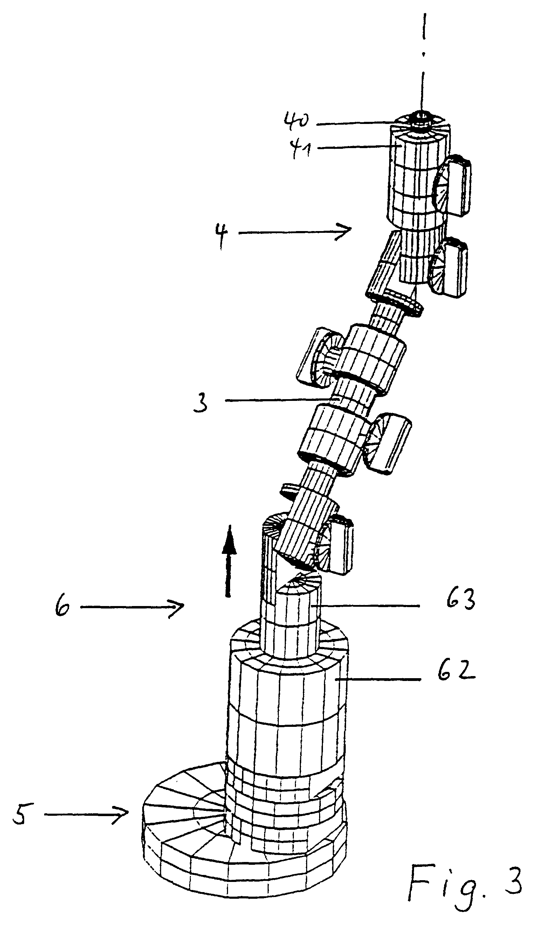

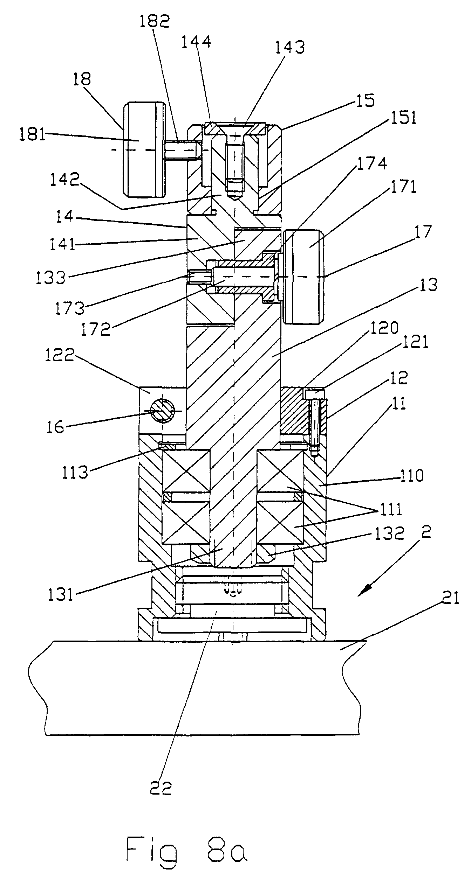

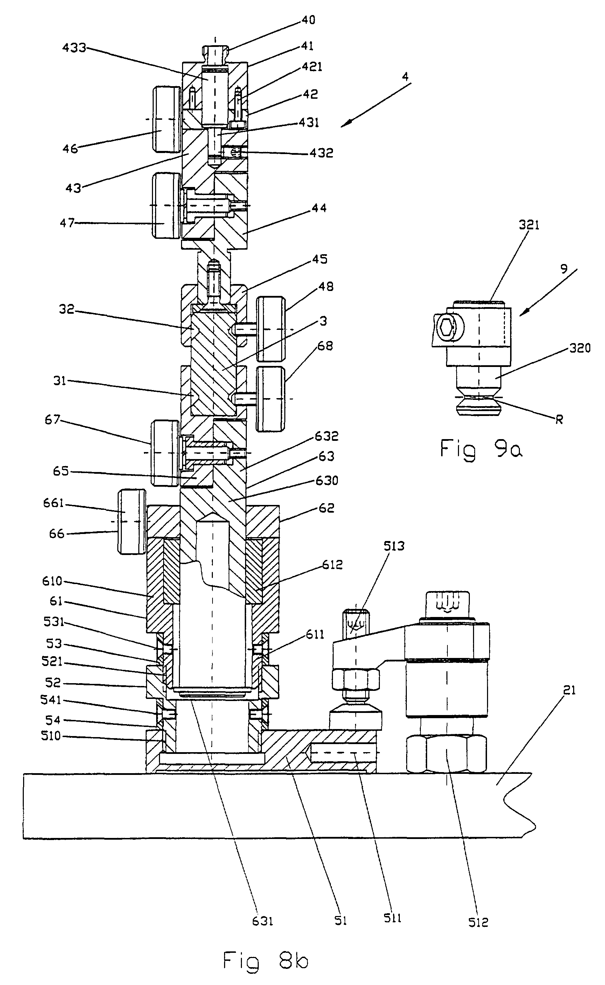

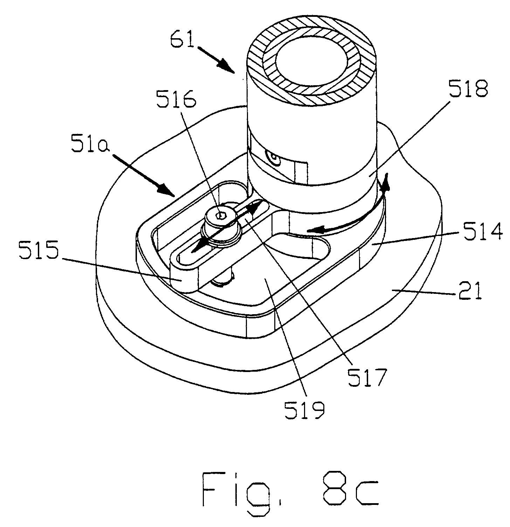

- Figur 8 b: eine konkretisierte zweite Form des Positioniersystems analog Figur 3 im Schnitt;
- Figur 8 c: einen konkretisierten alternativen Sockel für ein Positioniersystem;

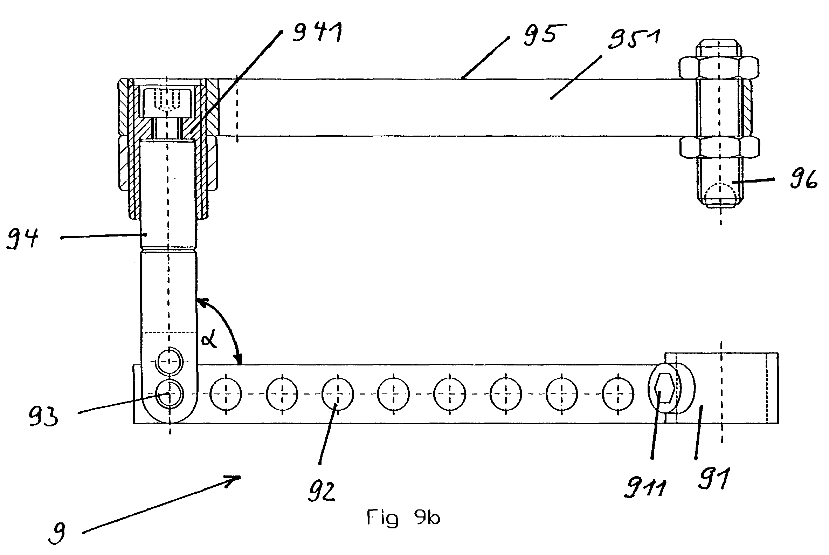

- Figur 9 a-c: eine zweite und dritte Stützeinrichtung mit Spannelementen;

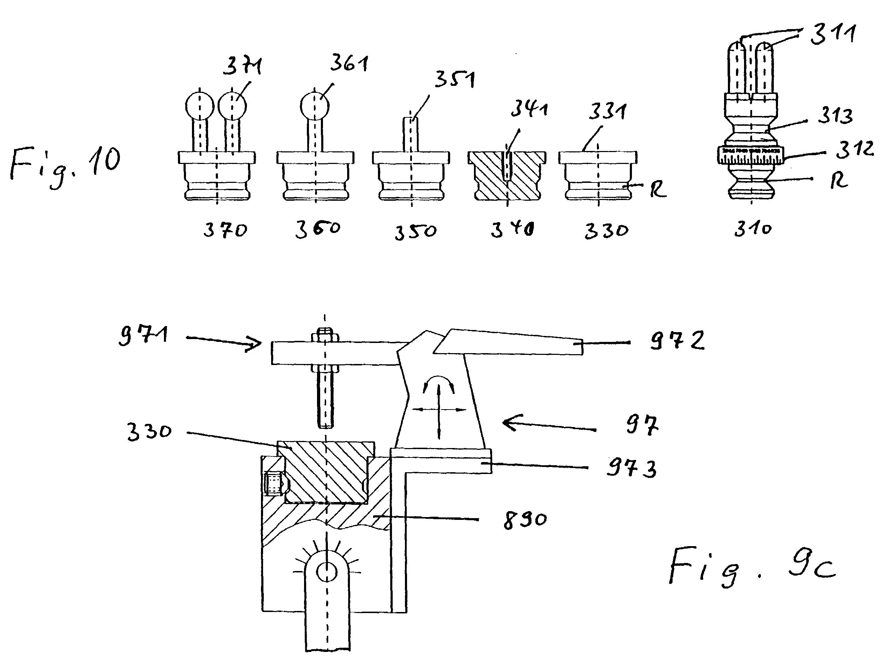

- Figur 10: unterschiedliche Formen von Stützeinrichtungen.

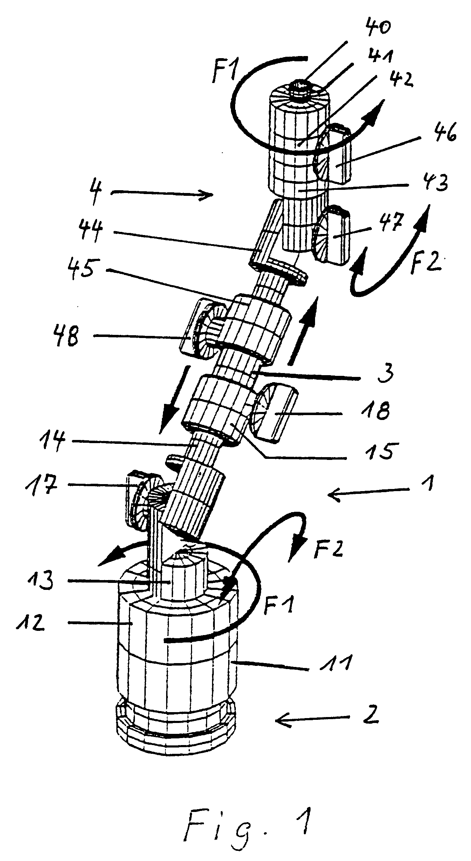

Identische oder gleichwirkende Bauteile sind im folgenden mit identischen Bezugszeichen versehen.
Ein Positioniersystem gemäß Figur 1, dessen Teile im wesentlichen aus Leichtmetall bestehen, zeigt die Basis einer Justiervorrichtung 2, die mit einer Kupplung 1 versehen ist, welche über ein Distanzstück 3 mit einer Kupplung 4 eines Werkzeuges/ einer Maschine koppelbar ist. Ein feststehendes Teil 11 ist mit einem Klemmring 12 versehen, mit dem eine, mit Freiheitsgrad F 1 um 360° drehbare Welle 13 in beliebigem Rotationswinkel relativ zum Fixteil 11 feststellbar ist. Die Welle 13 ist mit einem, um die Feststelleinrichtung 17 schwenkbeweglichem, Koppelteil 14 verbunden, welches einen Freiheitsgrad von etwa 180° hat, so daß zwischen der Welle 13 und dem Koppelteil 14 ein Winkel von etwa +/- 90° zur Längsachse des Teiles 13 einstellbar ist. Auf diesem Koppelteil 14 ist ein nach Art einer Überwurfmutter oder Überschiebehülse ausgebildetes Teil 15 angeordnet, welches in Richtung auf die Feststelleinrichtung oder das Zwischengelenk 17 in Ruheposition beweglich ist, andererseits aber über ein Distanzstück 3 überschiebbar ist und mit diesem durch die Feststelleinrichtung 18 verbunden wird. Das Distanzstück 3 ist andererseits mittels einer, zu Vorrichtung 18 identisch ausgebildeten, Feststelleinrichtung 48 in einer Überschiebehülse 45, welche ähnlich ausgebildet ist wie die Hülse 15, festgelegt. Die Hülse 45 kann wiederum auf dem Koppelteil 44 axial verschoben werden, so daß das Distanzstück 3 zwischen den Hülsen 45 und 15 entnommen oder eingesetzt werden kann. Das Koppelteil 44 bildet mit einem weiteren Teil 43, verbunden in einer Schwenkachse der Feststelleinrichtung 47, einen Winkel, der entsprechend dem Freiheitsgrad F 2, welcher genau wie der gleichnamige Freiheitsgrad an der Justiervorrichtung 1, 2 etwa +/- 90° zur Achse des Teiles 43 ausgebildet sein kann. Das Teil 43 ist maschinenseitig über einen Adapter 41 gehalten, wobei sich das Teil 43 mit F 1 rotatorisch um 360° zur Achse des Teiles 41 bewegen läßt, aber stillgesetzt werden kann durch Feststelleinrichtung 46 an Klemmring 42. Das Teil 4 kann insgesamt auch als Werkzeug, Maschinenkopf oder Meßkopf mit Kupplung bezeichnet werden.
Die in Figur 1 dargestellten Teile des Positioniersystems gestatten es, ein Werkzeug bzw. eine Meßvorrichtung mit Hilfe einer Meßmaschine, die an dem Zapfen 40 mit Adapter 41 verbindbar ist, zu benutzen, um Positionen von Stützsäulen mit Hilfe der Justiervorrichtung und des Werkzeuges räumlich exakt zu berechnen und anschließend auszurichten. Dazu wird die Meßmaschine auf die dargestellte Position relativ zu der Basis 2 gebracht, wobei die zuvor errechnete räumliche Lage der Achse, einer Verbindungslinie der Achsen der Feststelleinrichtungen 17 und 47 - zuvor auch schneidende Achse genannt - symbolisiert ist. Die Distanz der Achsen der Bauteile 41 und 13 wird durch das Distanzstück 3 mit fixer Länge und die Baulängen der entsprechenden Kuppelteile 14 und 44 bestimmt.
Nachdem die Meßmaschine mit dem Werkzeug 4 in die dargestellte Position gefahren ist, wird das Distanzstück 3 zwischen der Justiervorrichtung 2 und dem Werkzeug 4 eingekuppelt und die Feststelleinrichtungen 48 und 18 festgezogen, so daß eine genaue Distanz der Vertikalachsen oder eine genaue Länge des interessierenden Abschnittes der schneidenden Achse sichergestellt ist. Sodann wird die Feststelleinrichtung 46 betätigt, um den Freiheitsgrad F 1 zu sperren, sowie die Befestigungseinrichtung 47 festgezogen, um den Freiheitsgrad F 2 zu sperren, nachdem zuvor schon der transiatorische Freiheitsgrad, dargestellt durch die Pfeile parallel zur schneidenden Achse, durch Fixieren des Distanzstückes mit Hilfe der Feststelleinrichtungen 18, 48 beschränkt wurde.

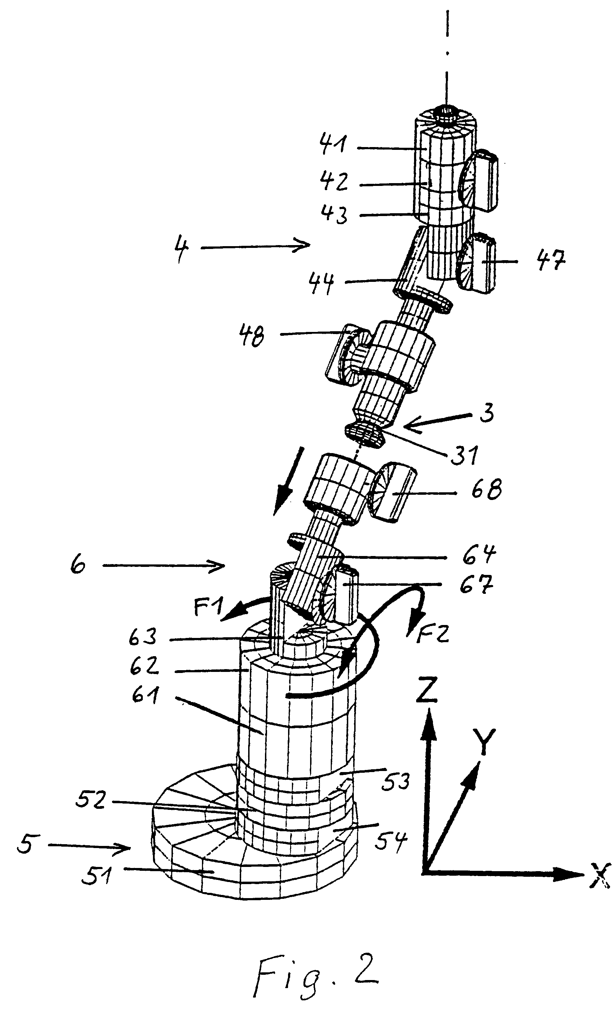

Figur 2 zeigt nun, daß anschließend die Feststelleinrichtung 18 der Justiervorrichtung (Figur 1) bzw des entsprechenden Koppelteiles gelöst wurde, wobei die Ringnut 31 des Distanzstückes freigegeben wurde, so daß das Distanzstück 3 von dem Werkzeug 4 zu einer Stützsäule mit Kupplung 6 und Basis 5 bewegt wurde. Die Basis der Stützsäule ist in X- und Y-Richtung vorjustiert und auf einer Basisplatte (Figur 8 b) derart verschoben worden, daß innerhalb der Kupplung 6 der Stützsäule zunächst eine Höhenjustierung (Figur 3) in Richtung Z der Kupplungsachse 63 und anschließend die Säulemit Koppelteil 64 über das Distanzstück 3 geschoben werden kann, so daß die Feststelleinrichtung 68 an dem Koppelteil 64 in die Nut 31 des Distanzstückes eingreifen und die Verbindung zwischen Werkstück und Stützsäule exakt justieren kann. Dazu ist es zunächst gleichgültig, ob die Aufnahme (Teil 64) für das Distanzstück entlang der schneidenden Achse (Pfeil) beweglich und über das Distanzstück schiebbar ist oder ob, gemäß Figur 8 b, die Aufnahme (Teil 65) für das Distanzstück an der Stützsäule feststeht und nicht als Überschiebemuffe ausgebildet ist. Dies hat den Vorteil, daß die Ausführung gemäß Figur 8 b exakter ist und weniger Spiel zuläßt.
Die Stützsäule hat ein feststehendes Teil 61, einen Klemmring 62, in dem die Welle 63 entsprechend Freiheitsgrad F 1 rotatorisch beweglich ist und zugleich in ihrer Höhe verstellbar ist, wie es der Pfeil in Figur 3 zeigt. Die Koppelteile 63, 64 sind über das Zwischengelenk bzw. die Feststelleinrichtung 67 schwenkbar, wobei ein Freiheitsgrad F 2 von +/- etwa 90°, vorzugsweise 2 bis 5° je Richtung mehr, beweglich ist. Nachdem die Stützsäule 5, 6 mit dem Werkzeug 4 gekoppelt ist, dargestellt in Figur 3, wird die Feststelleinrichtung 67 für das Zwischengelenk und eine nicht dargestellte Feststelleinrichtung für den Klemmring 62 betätigt, so daß die beiden Freiheitsgrade F 1 und F 2 gesperrt sind und das Teil 64 mit seiner Achse, genauer: der durch die Achsen der Teile 44, 3, 64 definierten schneidenden Achse, fixiert sind. Während der Montage der Stützsäule war die Meßmaschine mit dem Adapter 41 genau in die Position gefahren, die sich durch die schneidende Achse ergibt und in die durch das Distanzstück oder z. B. dessen Endflächen definierte Referenzebene in Abstand zu der vertikalen Achse des Adapters.

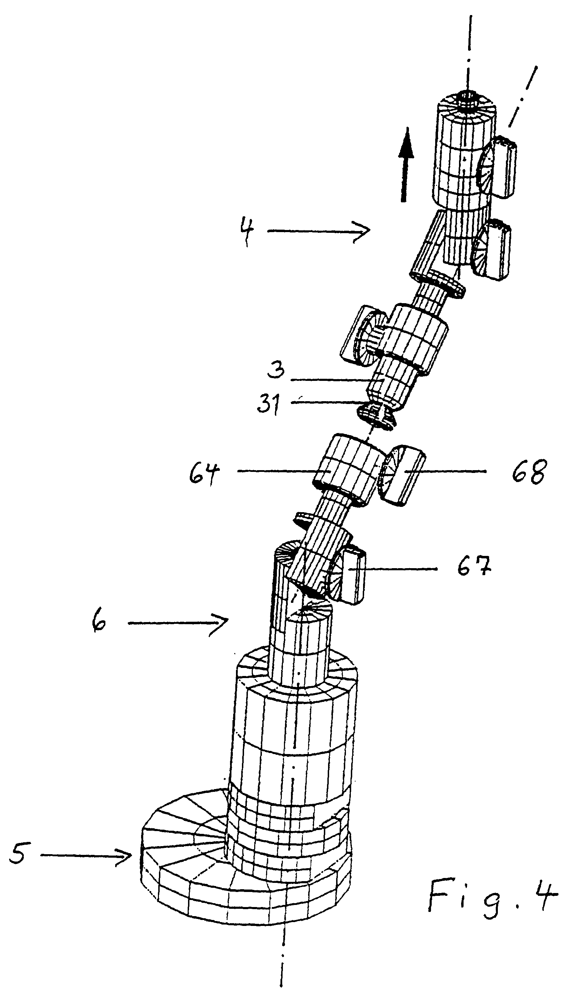

Figur 4 zeigt, daß nunmehr die Feststelleinrichtung 68 gelöst wird, damit die Meßmaschine mit dem Werkzeug 4 und dem Distanzstück 3 die Stützsäule verlassen kann. Alternativ kann das Distanzstück 3 zunächst in der Stützsäule verbleiben und später entnommen werden.

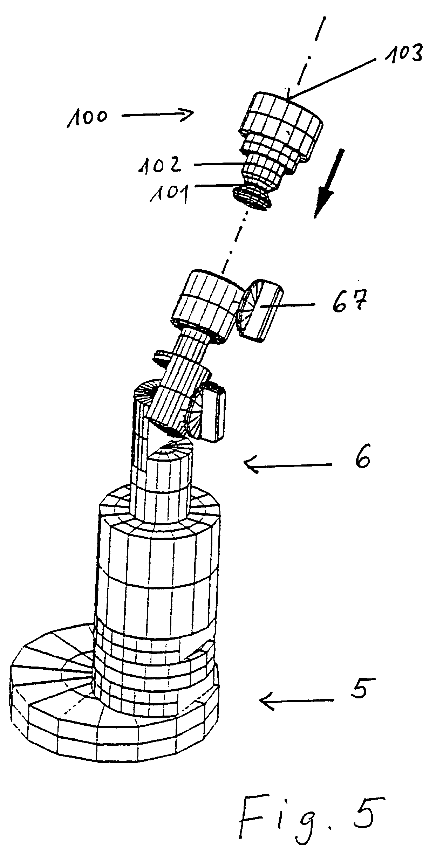

Figur 5 zeigt dann, daß dieses Distanzstück durch eine Stützeinrichtung 100 ersetzt wird. Dieses ist mit einer zur Auflage des Werkstückes komplementären Fläche, ihrer Oberseite 103, sowie mit einem Zapfen 102 und einer Nut 101 ausgestattet, welche von der Feststelleinrichtung 67 in der exakten Sollposition fixiert werden kann.

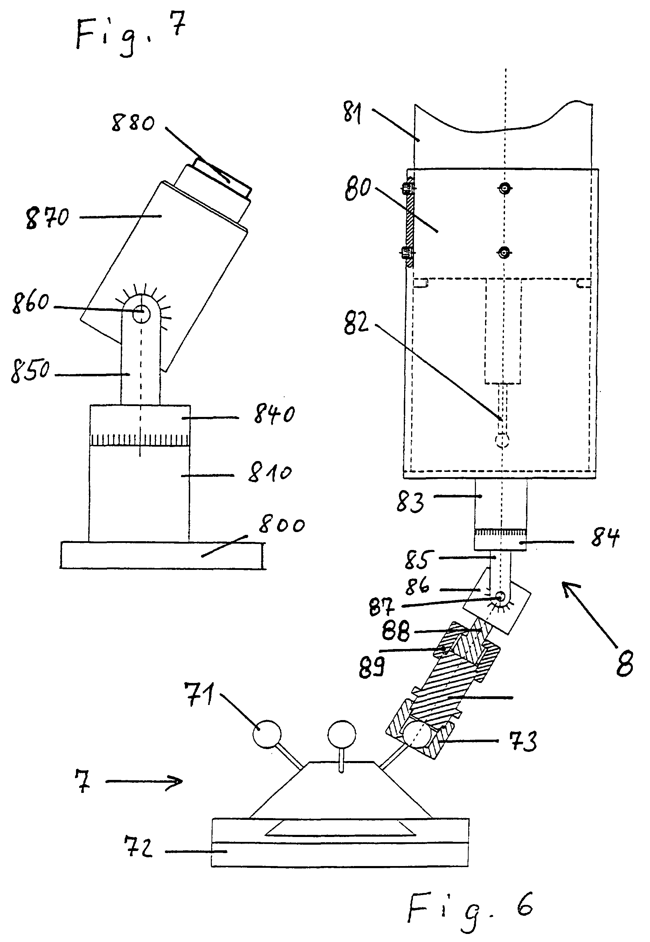

Figur 6 zeigt anstelle einer Justiervorrichtung 1, 2 eine alternative Justiervorrichtung 7, umfassend einen Kreuzschlitten 72, angeordnet auf einer nicht dargestellten Basisplatte. Auf dem Kreuzschlitten 72 sitzen Referenzkugeln 71 versehen mit einer Überwurfhülse 73 für ein Distanzstück.

Das Werkzeug 8, hier ausgebildet als Hülse 80, welche über den Meßkopf 81 mit Taster 82 schiebbar ist. Die Hülse 80 weist einen Zapfen 83 auf, an dem eine rotatorische Kupplungseinheit 84 mit einem Freiheitsgrad von 360° um die Vertikalachse des Meßkopfes, sowie eine auf dem Kupplungsteil angeordnetes Gabelstück 85, welches seinerseits wiederum eine Schwenkeinheit 86 trägt, welche um +/- 95° um Schwenkachse 87 schwenkbar ist. An dieser Schwenkeinheit ist ein Kuppelteil 88 angeflanscht, versehen mit einer Überwurfhülse 89 zur Verbindung dieser Kupplung mit dem Distanzstück 33. Die um 360° und die um +/- 95° Schwenkungen der Einheiten werden in diesem Fall durch elektrisch betriebene Schrittmotore oder Servomotore ausgeführt, welche von dem Rechner der Meßmaschine bzw. der den Meßkopf bewegenden Maschine ansteuerbar ist, wodurch die entsprechenden Schwenkwinkel oder Rotationswinkel direkt aus dem Softwareprogramm auf die in Figur 7 dargestellte Positioniereinrichtungen übertragbar sind. Da die Justiervorrichtung mit den Kugeln 71 ausgestattet ist, ist relativ zu diesen Kugeln die Achse des Meßkopfes in der dargestellten Weise frei beweglich und zwar mit zwei rotatorischen Freiheitsgraden, so daß die Verbindung von Kugelmitte bis zum Gelenk 87 letztlich die schneidende Achse im Sinne der Erfindung darstellt.

Figur 7 zeigt eine alternative Justiereinrichtung anstelle des Kreuzschlittens und des mit Kugeln ausgestatteten Einstellkopfes, welche an einer vorgegebenen Stelle auf einem Meßmaschinentisch oder einer Basisplatte 800 angeordnet werden kann. Insoweit stellen die Vorrichtungsteile 800 bis 880 eine spiegelbildliche Ausführung der zuvor geschildeten Ausführung des Werkzeuges mit den Bezugsziffern 80 bis 88 dar. Auf dem Maschinentisch 800 ist eine Basiseinheit 810 einer Justiereinrichtung fixiert, in der um 360° beweglich ein programmierbarer Schrittmotor angeordnet ist, der um einen vorgebbaren Winkel, z.B. mit Endschalterfunktion einstellbar ist. Dieser Drehkopf hält in einer Gabel 850 an Gelenk 860 einen weiteren Drehkopf mit integriertem Programmierbarem Schrittmotor, der um den Drehzapfen um +/-100° schwenkbar ist, wie dies die Winkelskalenstriche andeuten. Der Schrittmotor 870 trägt auf seiner Kopfseite einen Magneten 880, mit dem anstelle der zuvor beschriebenen Koppelteile für ein Distanzstück 3 dieses Distanzstück magnetisch auf dem Justierkopf exakt fixiert wird. Alternativ kann natürlich auch auf einem derartigen Schrittmotor oder Schwenkgerät die bereits als Teil 1 beschriebene Koppeleinrichtung (Figur 1) Verwendung finden.

Figur 8 a zeigt in einer konkretisierten Form gegenüber Figur 1 eine Justiervorrichtung mit den Teilen 1 und 2. Das Teil 2 umfaßt hier eine Basisplatte 21 und eine Fixiereinrichtung 22 für das feststehende Teil 11 der Kupplung 1. In einem Gehäuse 110 sind zwei Achsial- und Radiallager 111 mittels Sprengring 113 sowie Mutter 132 auf dem Gewindezapfen 131 fixiert.

Der Gewindezapfen 131 gehört zu der Welle 13, welche somit rotatorisch frei beweglich aber andererseits exakt und spielfrei in der Hülse 110 gelagert ist. Ein allgemein mit der Ziffer 12 bezeichneter Klemmring besteht aus einem geschlitzten Torus 120, der mittels Schrauben 121 an der Hülse 110 einseitig fixiert ist, während andererseits den Schlitz 122 eine Klemmschraube 16 durchsetzt, um die Welle 13 in ihrem rotatorischen Freiheitsgrad zu sperren. Die Welle 13 endet in der Halbwelle oder dem Zapfen 133, welcher mit einem komplementär ausgebildeten Zapfen 141 des Teiles 14 mittels einer Feststelleinrichtung 17 verbunden ist. Die Feststelleinrichtung umfaßt eine Flügelmutter 171 mit Gleitzapfen 172, der in einen Gewindezapfen 173 endet. Der Gleitzapfen sitzt in einer die beiden Wellenteile 133, 141 überbrückenden Bohrbuchse 174, während er in eine Gewindebohrung des Zapfenteiles 141 einschraubbar ist, so daß der kupplungsseitige Kopf der Flügelmutter den Zapfen 133 klemmend gegen den Zapfen 141 festspannt. Das Teil 14 endet in einem zentrischen Führungsteil 142 mit etwa dem halben Durchmesser des größten Maßes des Zapfens 14. Am Kopf des Führungsteiles 142 ist mittels Schraube 143 eine Bundscheibe 144 festgelegt, so daß eine Hülse 15 mit ihrem an der Führung 142 gleitenden Bund 151 nicht von dem Teil 14 abfallen kann. Die Hülse 15 wird durch eine aus Flügelmutter 181 mit Gewindezapfen 182 versehene Feststelleinrichtung in einem nicht dargestellten Gewinde durchgriffen und kann so gemäß Figur 1 ein Distanzstück 3 in der Nut 31 fixieren.

Figur 8 b zeigt in ähnlichem Aufbau wie die Justiervorrichtung eine Vorrichtung, die als Stützsäule ausgebildet ist, wobei der feste Teil 5, einen Sockel 51 mit Innengewinde 510 umfaßt, das mit Hilfe einer Spannvorrichtung 511 bzw. 512, 513 auf einer Basisplatte 21 fixierbar ist. Bei Bedarf kann in diese Basiseinheit eine Verlängerung 52 Außengewinde in das Gewinde der Basiseinheit 51 eingeschraubt werden. Die Stahlbleche 53, 54 , welche mittels Schraube 531, 541 fixiert werden, definieren Flächen für das Ansetzen von Gabelschlüsseln, um die Gewindeteile gegeneinander festziehen zu können. Die Verlängerung 52 kann in beliebiger Säulenhöhe ausgebildet werden. Auch die Verlängerung 52 trägt ein Innengewinde 521 und kann darin ein feststehendes Teil 61mit Außengewinde 611 der Kupplung 6 aufnehmen. Der feststehende Teil 61 der Kupplung besteht aus einer Hülse 610 mit innen liegender Führungsbuchse 612 für die Welle 63, welche in der Führungsbuchse 612 sowohl rotatorisch als auch in Achsrichtung der Welle beweglich ist. Die translatorische Bewegung der Welle in Z-Richtung wird durch einen Sprengring 631 im Zusammenspiel mit der Buchse 612 begrenzt. Der Größtdurchmesser 630 der Welle 63 kann mit Hilfe eines geschlitzten Ringes 62, sowie der Feststelleinrichtung 66 mit Flügelmutter 661 sowohl in rotatorischer als auch in translatorischer Richtung klemmend fixiert werden. Der Zapfen 632 der Welle 63 wird mit einem ähnlich ausgebildeten Zapfen mittels einer Feststelleinrichtung 67, die mit der Feststelleinrichtung 17 identisch ist, kraftschlüssig in ihrer Schwenkwinkelposition arretiert werden. Das Teil 65 kann ähnlich dem Teil 14oder 64 ausgebildet sein, jedoch ist es günstiger auf eine Überschiebehülse ähnlich der Hülse 15 zu verzichten und statt dessen mit einer rotationssymmetrischen Innenzentrierung als Flansch des Teiles 65 ausgebildet werden. In diese Zentrierung des Flansches kann ein Distanzstück 3 mit Nuten 31 durch eine entsprechende Feststelleinrichtung 68, welche identisch gleich zu der Feststelleinrichtung 18 ausgebildet ist, fixiert werden. Es ist deutlich zu sehen, daß der Stift mit seinem Kopf sich an eine Flanke der Nut 31 anlegt und so dafür sorgt, daß relativ zu der Feststellvorrichtung 48 in Nut 32 des Distanzstückes 3 dieses Distanzstück spielfrei geklemmt wird. Die Hülse 45, das Koppelteil 44 und die Feststelleinrichtung 47 sind in gleicher Weise ausgebildet wie die Hülse 15, das Koppelteil 14 und die Feststelleinrichtung 17. Die Feststelleinrichtung 47 klemmt an das Koppelteil 44, ein Wellenstück 43 in dem zentrisch eine Welle 431 mittels Schraube 432 fixiert ist, die auf ihrem größeren Bund 433 einen Adapter 41 drehbeweglich lagert. Der Adapter 41 endet in einem Verbindungsgewinde 40 zu einer Werkzeugmaschine oder Meßmaschine. Der Adapter 41 ist mit einem Klemmring 42 durch eine Schraube 421 verbunden. Dieser Klemmring 41 ist geschlitzt und kann durch die Feststelleinrichtung 46 mittels einer dargestellten Flügelmutter gespannt werden, so daß die Rotationsbewegung der Welle 433 in Adapter 41 gesperrt wird. Andererseits kann das Teil 43, wie bereits zuvor beschrieben, schwenkbeweglich um die Feststelleinrichtung 47, zuvor auch Zwischengelenk genannt, mit dem Teil 44 verbunden sein. Der Adapter 41 bzw. das Verbindungsgewinde 40 kann gegebenenfalls so an eine Aufnahme eines Meßmaschinenkopfes angepaßt sein, daß eine Signalverbindung vom Rechner der Meßmaschine oder eine Elektroleitung für Antriebsenergie in das, allgemein als Teil 4 bezeichnete, Werkzeug einkoppelbar ist.
Zweck dieser Verbindungen sind z.B. die bei Meßtastern üblichen Kollisionssensoren weiter benutzen zu können oder eine Antriebsenergie für die Schrittmotoren, die gemeinsam dieses Werkzeug 4 bilden oder Teile von diesem Werkzeug sind, anzutreiben bzw. Stellbefehle an diese zu übermitteln.

Figur 8 c zeigt eine Alternative für den zu spannenden Sockel 5,51 beziehungsweise die Spannvorrichtung 511 bis 530 gemäß Figur 8 b auf einer Basisplatte 21. Die Basisplatte 21, ein ebener Spanntisch mit Nuten oder Löchern in Rasterabstänen, dient der Abstützung und Fixierung des Sockels 51 a, einer nur mit Teil 61 dargestellten Säule. Die Fußplatte 514 ist auf der Basisplatte 21 frei positionierbar. Sie weist einen Durchbruch 519 auf, der partielle Kongruenz mit dem Langloch 517 im Zwischenring 515 hat. Zwischenring 515 und Adapterring 518 sind beide oder einzeln entsprechend der Pfeilrichtung rotatorisch frei beweglich gegenüber der Fußplatte 514 beziehungsweise dem Säulenteil 61. Dadurch ist es möglich, daß die Schraube 516 in Pfeilrichtung im Langloch 517 und zugleich im Durchbruch 519 verschoben wird, bis sie in einer komplimentären, nicht dargestellten, Mutter, Loch- oder Nutenstein in der Basisplatte 21 eingreifen und so die Säule fixieren kann.

Figur 9a zeigt eine allgemein mit der Ziffer 9 versehene Spanneinrichtung, welche an eine Stützeinrichtung 320 gekoppelt ist und die ein ähnliches Aussehen wie ein Distanzstück 3 hat, insbesondere mit einer Ringnut R versehen ist, um die Stützeinrichtung 320 mit Hilfe der Feststelleinrichtung 68 halten zu können. Die eigentliche Stützfläche ist für die Auflage eines Werkstückes mit 321 bezeichnet.

Figur 9 b zeigt die Spanneinrichtung 9 mit der Schelle 91 für den Umgriff um eine Stützeinrichtung 310 bis 370 (Figur 10), wobei die Stützeinrichtung mit der Schraube 911 an der Stützeinrichtung fixiert wird. Ein erster Hebel 92 weist eine Vielzahl von Lochungen für eine Säule 94 auf, die mit dem Hebel 92 durch ein Drehgelenk 93 schwenkbeweglich verbunden ist. Der Hebel 94 seinerseits weist an seinem freien Ende ein Schwenkgelenk 941 mit 360° rotatorischem Freiheitsgrad auf und ist in dem Drehgelenk gekoppelt mit einer Pratze 95, welche an ihrem freien Ende einen Klemmbolzen 96 trägt, der innerhalb des Langloches 951 längs der Pratze 95 so verstellbar ist, daß er entsprechend des Versatzes des Drehpunktes 93 jeweils über der Schelle 91 justierbar ist.

Figur 9 c zeigt eine weitere Möglichkeit des Spannens von Werkstücken mit Hilfe eines Spanners 97, der auf dem Kopf 890 mittels Schraube 891 einer Vorrichtung 870 (Figur 7) befestigt ist. Der Spanner 97 ist auf der Basis 973 aufgebaut, wobei die Basis ihrerseits am Kopf 890 (ähnlich Figur 7) befestigt ist. Je nach Bewegung des Hebels 972 kann die Pratze 971 oder der Spanner 97 selbst in der durch die Pfeile angegebenen Richtung bewegt werden und so angepaßt jeweils den richtigen Klemmpunkt für die Pratze 971 gegenüber der Stützeinrichtung 330 finden.

Figur 10 zeigt diverse Stützeinrichtungen 310 - 370, welche in das Koppelteil einsetzbar sind und dort mittels der Feststelleinrichtung 68 die Stützeinrichtung 310 in ihrer Ringnut R arretieren kann. Erforderlichenfalls kann an der Ringnut 313 eine weitere Spanneinrichtung angekoppelt werden, mit deren Hilfe die mehrdimensionale Unterstützung 311 eines nichtdargestellten Werkstückes, z.B. einer Rohrleitung oder eines Prismas ergänzend fixieren kann. Mit 312 ist eine Schwenklagerung mit Winkelskalierung oder Nonius bezeichnet, die es ermöglicht die Zapfen der mehrdimensionalen Stützpunkte 311 noch nach Spannen der Stützeinrichtung 310 an die Lage des Werkstückes additiv anzupassen.

In ähnlicher Weise zeigen die weiteren Stützeinrichtungen zur Verwendung mit den Stützsäulen 5, 6, wobei die jeweiligen Oberflächen 331 bis 371 an die entsprechende Kontur eines Werkstückes angepaßt sind. So können beispielsweise mit den Oberflächen 351 und 361 ringförmige Werkstückflächen gestützt werden, während die Fläche 341 den Einsatz einer beliebigen, der Werkstückkontur angepaßten Stützkontur ermöglicht. Als Referenzebene kann hierbei jeweils die kreisrunde Deckfläche oder Unterseite der Stützeinrichtung dienen, während die vertikale Mittellinie dieser Stützeinrichtung mit der schneidenden Achse zusammenfällt.

## Patentansprüche

1. Verfahren zur genauen Positionierung von Vorrichtungen zur temporären Fixierung eines Werkstückes in einem dreidimensionalen Arbeitsraum bekannter Koordinaten, wobei
- das Werkstück eine mehrdimensionale Auflage benötigt,
- eine alle Koordinaten mit einem Werkzeug anfahrbar gestaltete und mittels Rechner geführte Maschine, insbesondere eine Meßmaschine mit Meßkopf, und eine auf einer Basisplatte freibewegliche höhenverstellbare Vorrichtung verwendet wird,
- die Vorrichtung mit einer ersten Kupplung und das Werkzeug mit einer zweiten Kupplung rotatorisch beweglich verbunden sind, jede Kupplung mindestens zwei Koppelteile umfaßt, welche durch feststellbare, schwenkbewegliche Zwischengelenke verbunden sind und beide Kupplungen temporär indirekt miteinander koppelbar sind,
umfassend folgende Verfahrensschritte:
a) mit Hilfe des Rechners wird die räumliche Anordnung der mehrdimensionalen Auflage im Arbeitsraum ermittelt,
b) eine Referenzebene der Auflage und eine die Referenzebene schneidende Achse wird festgelegt,
c) ein Koppelteil der zweiten Kupplung wird am Werkzeug - nach Festsetzen des Zwischengelenkes dieser Kupplung in Richtung der schneidenden Achse - fixiert,
d) das Werkzeug wird auf die schneidende Achse mit definiertem Abstand zur Referenzebene verfahren,
e) ein Koppelteil der zweiten wird mit einem Koppelteil der grob vorjustierten ersten Kupplung verbunden und dann die Koppelteile der ersten Kupplung in der durch die zweite Kupplung definierten Achsrichtung fixiert,
f) sodann die Vorrichtung auf der Basisplatte und in ihrer Höhenlage festgesetzt,
g) nach Entkoppeln der Kupplungen wird in das freie Koppelteil der ersten Kupplung eine zur Auflage am Werkstück komplementäre Stützeinrichtung eingesetzt.

2. Verfahren nach Anspruch 1, **dadurch gekennzeichnet, daß** bei Verwendung von manuell dreh- oder schwenkbeweglichen Kupplungen in Verfahrensschritt c) zunächst
c1) das Werkzeug in einem Zwischenschritt zu einem Referenzpunkt des Arbeitsraumes gefahren wird, der auf einer zu der schneidenden Achse parallelen Achse in definiertem Abstand zu einer an einer definierten Stelle der Basisplatte positionierten Justiervorrichtung mit einer ersten Kupplung liegt und nach Kopplung der Justiervorrichtung mit der zweiten Kupplung das Zwischengelenk dieser Kupplung festgesetzt wird und
im Verfahrensschritt e) zunächst
e1) das Zwischengelenk der ersten Kupplung nach indirektem Verbinden der Koppelteile beider Kupplungen festgesetzt wird.

3. Verfahren nach Anspruch 1 oder 2, **dadurch gekennzeichnet, daß** die Kupplung insgesamt oder deren Koppelteile jeweils in einer zur Basisplatte parallelen Ebene um 360° schwenkbeweglich und in der dazu vertikalen Ebene um etwa +/- 90° schwenkbeweglich gehaltert sind.

4. Verfahren nach einem der vorhergehenden Ansprüche, **dadurch gekennzeichnet, daß** eine elektrisch verstellbare Kupplung verwendet wird und gemäß Verfahrensschritt c) oder e) in mindestens einer Ebene mit Hilfe der vom Rechner ermittelten Koordinaten oder Winkelwerte mittels elektrischer Signale auf den Raumwinkel der schneidenden Achse positioniert werden.

5. Verfahren nach einem der vorhergehenden Ansprüche, **dadurch gekennzeichnet, daß** die Kupplungen an Vorrichtung und Werkzeug mit einem Distanzstück bekannter Länge zum Ausgleich einer Winkeldifferenz und/ oder eines systembedingten Abstandes zur Referenzebene vorübergehend verbunden werden.

6. Positioniersystem, insbesondere für ein Verfahren nach einem der Ansprüche 1 bis 5, umfassend eine von einem Rechner gesteuerte Maschine mit dreiachsig beweglichem Kopf für ein Werkzeug oder einen Meßtaster,
eine Basisplatte,
auf der Basisplatte frei bewegliche und festsetzbare Vorrichtungen nach Art von Stützsäulen für zu behandelnde Werkstücke, sowie
ein den Kopf und die Stützsäule zur genauen Positionierung einer Stützvorrichtung an der Stützsäule unter einer Auflage des Werkstückes temporär koppelndes Kupplungssystem,
**gekennzeichnet durch** ein Kupplungssystem, umfassend je eine gleichwirkende Kupplung am Kopf und an der Stützsäule, wobei jede Kupplung aus zwei **durch** ein Zwischengelenk verbundenen Koppelteilen besteht, von denen eines einen rotatorischen Freiheitsgrad von 360° und
das andere senkrecht dazu einen rotatorischen Freiheitsgrad von etwa 180° aufweist und die Koppelteile zueinander sowie relativ zu dem Kopf und der Stützsäule unter einem wählbaren Winkel mittels Feststelleinrichtungen festsetzbar sind.

7. Positioniersystem nach Anspruch 6, **gekennzeichnet durch** eine auf der Basisplatte positionierbare Justiervorrichtung für die Ausrichtung der Kupplung am Kopf.

8. Positioniersystem nach Anspruch 6 oder 7, **dadurch gekennzeichnet, daß** die Justiervorrichtung ebenfalls eine gleichwirkende Kupplung oder eine Kupplung mit einer Referenzkugel mit Zentriereinrichtung nach Art einer Überwurfverbindung zu einem anzukoppelnden Teil aufweist.

9. Positioniersystem nach einem der Ansprüche 6 bis 8, **dadurch gekennzeichnet, daß** eine Stützsäule mit einer Stützeinrichtung ausgestattet ist, die in ihrer Sollage eine der Referenzebene der Werkstückauflage parallele kupplungsseitige Auflagefläche aufweist.

10. Positioniersystem nach einem der Ansprüche 6 bis 9, **dadurch gekennzeichnet, daß** die Stützeinrichtungen mit fixierter Länge ausgebildet ist.

11. Positioniersystem nach einem der Ansprüche 6 bis 10, **dadurch gekennzeichnet, daß** die Stützeinrichtung werkstückseitig mit einer der Werkstückkontur an dessen Auflage komlementär ausgebildeten Oberfläche versehen ist.

12. Positioniersystem nach einem der Ansprüche 6 bis 11, **dadurch gekennzeichnet, daß** die Stützeinrichtung mit einer Spanneinrichtung für das Werkstück verbindbar gestaltet ist.

13. Positioniersystem nach einem der Ansprüche 6 bis 12, **dadurch gekennzeichnet, daß** die Kupplung aufweist:
- ein erstes Koppelteil mit zentrischer Führung für ein anzukoppelndes Teil, ein muffenartiges Hülsenteil und eine Arretierung für eine Verbindung des Hülsenteiles mit dem anzukoppelnden Teil,
- ein zweites Koppelteil mit zentrischer Welle und dazu rotatorisch um 360° frei beweglich und feststellbar angeordnetem Adapter für eine Verbindung mit einer Vorrichtung oder Maschine,
- sowie einem die Koppelteile schwenkbeweglich verbindenden Zwischengelenk mit einer Feststelleinrichtung für das Festsetzen der Koppelteile unter einem Relativwinkel zueinander im Bereich von etwa +/- 90°.

14. Positioniersystem einem der Ansprüche 6 bis 13, **dadurch gekennzeichnet, daß** das Hülsenteil und/oder der Adapter als über die anzukoppelnden Teile stülpbare Hülse ausgebildet sind, wobei das Hülsenteil parallel zur Achse der zentrischen Führung längsbeweglich ist und der Adapter relativdrehbeweglich zur Führung ausgebildet ist.

15. Positioniersystem einem der Ansprüche 6 bis 13, **dadurch gekennzeichnet, daß** mindestens eines der Koppelteile als Schrittmotor oder Servomotor ausgebildet ist, der um einen vorbestimmbaren Winkelgrad rotatorisch beweglich ist.

## Claims

1. Method of accurately positioning devices for temporarily fixing a workpiece in a three-dimensional working area of known co-ordinates, wherein
- the workpiece requires a multi-dimensional support,
- a machine, more especially a measuring machine with a measuring head, is used, which is adapted to encounter all of the co-ordinates with a tool and is guided by means of computers, and a vertically adjustable device is used, which is freely displaceable on a base plate,
- the device is connected to a first coupling, and the tool is connected to a second coupling so as to be rotatably displaceable, each coupling including at least two coupling members, which are connected by means of securable, pivotable intermediate joints, and both couplings are temporarily indirectly interconnectable,
said method including the following method steps:
a) the spatial disposition of the multi-dimensional support in the working area is ascertained by means of the computer,
b) a reference plane of the support and an axis, which intersects the reference plane, are determined,
c) a coupling member of the second coupling is fixed on the tool - once the intermediate joint of this coupling has been locked in the direction of the intersecting axis,
d) the tool is displaced onto the intersecting axis at a specific spacing from the reference plane,
e) a coupling member of the second coupling is connected to a coupling member of the roughly pre-adjusted first coupling, and then the coupling members of the first coupling are fixed in the axial direction defined by the second coupling,
f) then the device is locked on the base plate and in its vertical position, and
g) once the couplings have been uncoupled, a supporting means which is complementary to the support on the workpiece is inserted into the free coupling member of the first coupling.

2. Method according to claim 1, **characterised in that**, in method step c), if manually rotatable or pivotable couplings are used initially
c1) the tool in an intermediate step is moved to a reference point of the working area, which point lies with a first coupling on an axis, parallel to the intersecting axis, at a specific spacing from an adjusting device, which is positioned at a specific location on the base plate, and, once the adjusting device has been connected to the second coupling, the intermediate joint of this coupling is secured, and
in the method step e) initially
e1) the intermediate joint of the first coupling is secured after indirectly connecting the coupling members of both couplings.

3. Method according to claim 1 or 2, **characterised in that** the coupling generally or the coupling members thereof is or are respectively mounted so as to be pivotable through 360° in a plane parallel to the base plate and so as to be pivotable through approximately +/- 90° in the plane vertical thereto.

4. Method according to one of the preceding claims, **characterised in that** an electrically adjustable coupling is used and positioned, according to method step c) or e), onto the spatial angle of the intersecting axis in at least one plane by means of co-ordinates or angular values, ascertained by the computer, by means of electrical signals.

5. Method according to one of the preceding claims, **characterised in that** the couplings with device and tool are temporarily connected to a spacer member of known length to compensate for an angular difference and/or a system-conditioned spacing from the reference plane.

6. Positioning system, more especially for a method according to one of claims 1 to 5, including a machine, which is controlled by a computer and has a triaxially displaceable head for a tool or a measuring scanner,
a base plate,
devices, which are freely displaceable and securable on the base plate, in the form of supporting columns for workpieces to be treated, as well as
a coupling system, which temporarily connects the head and the supporting column for accurately positioning a supporting device on the supporting column beneath a support for the workpiece,
**characterised by** a coupling system, including a respective identically operating coupling on the head and on the supporting column, each coupling comprising two coupling members, which are connected by means of an intermediate joint, of which one coupling member has a degree of rotatable freedom of 360°, and the other coupling member has, perpendicularly thereto, a degree of rotatable freedom of approximately 180°, and the coupling members are lockable at a selectable angle relative to each other as well as relative to the head and the supporting column by means of securing arrangements.

7. Positioning system according to claim 6, **characterised by** an adjusting device, which is positionable on the base plate, for aligning the coupling on the head.

8. Positioning system according to claim 6 or 7, **characterised in that** the adjusting device equally includes an identically operating coupling or a coupling having a reference ball with a centering arrangement in the form of a coupling nut connection with a component part which is to be connected thereto.

9. Positioning system according to one of claims 6 to 8, **characterised in that** a supporting column is provided with a supporting arrangement which, in its desired position, includes a supporting face, which is parallel to the reference plane of the workpiece support and is on the coupling side.

10. Positioning system according to one of claims 6 to 9, **characterised in that** the supporting arrangement has a fixed length.

11. Positioning system according to one of claims 6 to 10, **characterised in that** the supporting arrangement is provided on the workpiece side with a surface which is complementary to the workpiece configuration on the support thereof.

12. Positioning system according to one of claims 6 to 11, **characterised in that** the supporting arrangement is adapted to be connectable to a clamping arrangement for the workpiece.

13. Positioning system according to one of claims 6 to 12, **characterised in that** the coupling includes:
- a first coupling member with a central guide means for a component part to be connected thereto, a collar-like sleeve member and a means for locking a connection between the sleeve member and the component part to be connected thereto,
- a second coupling member having a central shaft and being freely displaceable so as to rotate through 360° relative thereto, and having a securably disposed adapter for connection to a device or machine,
- as well as an intermediate joint, which pivotably connects the coupling members and has a securing arrangement for locking the coupling members at an angle relative to each other in the range of approximately +/- 90°.

14. Positioning system according to one of claims 6 to 13, **characterised in that** the sleeve member and/or the adapter are/is in the form of a sleeve, which can be drawn over the component parts to be connected thereto, wherein the sleeve member is longitudinally displaceable parallel to the axis of the central guide means, and the adapter is displaceable relative to the guide means.

15. Positioning system according to one of claims to 13, **characterised in that** at least one of the coupling members is in the form of a stepping motor or servomotor, which is displaceable so as to rotate through a predeterminable angular degree.

## Revendications

1. Procédé de positionnement précis de dispositifs destinés au blocage temporaire des pièces à traiter dans un espace de travail tridimensionnel à coordonnées connues, dans lequel
- la pièce à traiter nécessite un support multidimensionnel,
- on utilise un instrument conçu pour une approche avec un outil dans toutes les coordonnées et commandé par un ordinateur, en particulier un instrument de mesure avec une tête de mesure, et un dispositif réglable en hauteur librement mobile sur une plaque de base,
- le dispositif est assemblé avec un premier coupleur de manière à pouvoir tourner et l'outil est assemblé avec un deuxième coupleur de manière à pouvoir tourner, chaque coupleur comportant au moins deux pièces de couplage, qui sont assemblées par des joints articulés intermédiaires pivotants, pouvant être bloqués, et les deux coupleurs peuvent être couplés temporairement indirectement l'un avec l'autre,
comprenant les étapes suivantes :
a) détermination, à l'aide de l'ordinateur, de la disposition dans l'espace du support multidimensionnel dans l'espace de travail,
b) définition d'un plan de référence du support et d'un axe coupant le plan de référence,
c) fixation d'une pièce de couplage du deuxième coupleur contre l'outil - après blocage du joint articulé intermédiaire de ce coupleur en direction de l'axe d'intersection -,
d) déplacement de l'outil en direction de l'axe d'intersection avec une distance définie par rapport au plan de référence,
e) assemblage d'une pièce de couplage du deuxième coupleur avec une pièce de couplage du premier coupleur grossièrement ajusté, ensuite fixation des pièces de couplage du premier coupleur dans le sens de l'axe défini par le deuxième coupleur,
f) puis, fixation du dispositif sur la plaque de base et réglage de la hauteur dudit dispositif,
g) après découplage des coupleurs, mise en place d'un module de support, complémentaire du support de la pièce à traiter, dans la pièce de couplage libre du premier coupleur.

2. Procédé selon la revendication 1, **caractérisé en ce que**, en cas d'utilisation de coupleurs manuellement rotatifs et pivotants, il faut dans l'étape c) d'abord
c1) déplacer l'outil, dans une étape intermédiaire, vers un point de référence de l'espace de travail, qui est situé sur un axe parallèle à l'axe d'intersection, à une distance définie par rapport à un dispositif d'ajustement avec un premier coupleur, qui est positionné en un lieu défini sur la plaque de base et, après couplage du dispositif d'ajustement avec le deuxième coupleur, bloquer le joint articulé intermédiaire de ce coupleur, et
il faut dans l'étape e) d'abord
e1) bloquer le joint articulé intermédiaire du premier coupleur après l'assemblage indirect des pièces de couplage des deux coupleurs.

3. Procédé selon la revendication 1 ou 2, **caractérisé en ce que** l'ensemble du coupleur ou les deux pièces de couplage de celui-ci peuvent pivoter chacune sur 360° dans un plan parallèle à la plaque de base et peuvent être maintenus de manière à pouvoir pivoter sur +/- 90° environ dans le plan perpendiculaire à celui-ci.

4. Procédé selon l'une des revendications précédentes, **caractérisé en ce que** l'on utilise un coupleur réglable par voie électrique qui, selon l'étape c) ou e), est positionné au moyen de signaux électriques sur l'angle solide de l'axe d'intersection, dans au moins un plan à l'aide des coordonnées ou valeurs angulaires déterminées par l'ordinateur.

5. Procédé selon l'une des revendications précédentes, **caractérisé en ce que** les coupleurs sont assemblés temporairement contre le dispositif et l'outil avec une pièce d'écartement de longueur connue, afin de compenser une divergence angulaire et/ou un écartement par rapport au plan de référence, dû au système.

6. Système de positionnement, en particulier pour un procédé selon l'une des revendications 1 à 5, comprenant un instrument commandé par un ordinateur et muni d'une tête mobile sur trois axes pour un outil ou un palpeur de mesure,
une plaque de base,
des dispositifs librement mobiles sur la plaque de base et pouvant être bloqués, à la manière de consoles de support pour les pièces à traiter, ainsi
qu'un système de couplage destiné à coupler temporairement la tête et la console de support, afin de positionner exactement un dispositif de support contre la console de support, au-dessous d'un support de la pièce à traiter,
**caractérisé par** un système de couplage comprenant un coupleur à action identique sur la tête et sur la console de support, chaque coupleur étant formé par deux pièces de couplage assemblées par un joint articulé intermédiaire, parmi lesquelles l'une présente un degré de liberté en rotation de 360° et l'autre présente un degré de liberté en rotation de 180° environ perpendiculaire au premier, et des dispositifs de blocage permettent de bloquer les pièces de couplage l'une par rapport à l'autre, ainsi que par rapport à la tête et à la console de support en formant un angle librement définissable.

7. Système de positionnement selon la revendication 6, **caractérisé par** un dispositif d'ajustement qui peut être positionné sur la plaque de base et qui est utilisé pour orienter le coupleur sur la tête.

8. Système de positionnement selon la revendication 6 ou 7, **caractérisé en ce que** le dispositif d'ajustement comporte également un coupleur à action identique ou un coupleur avec une sphère de référence, muni d'un dispositif de centrage à la manière d'un assemblage par patte avec une pièce à coupler.

9. Système de positionnement selon l'une quelconque des revendications 6 à 8, **caractérisé en ce qu'**une console de support est munie d'un dispositif de support, qui, dans sa position théorique, comporte une surface de support qui, du côté du coupleur, est parallèle au plan de référence du support de la pièce à traiter.

10. Système de positionnement selon l'une quelconque des revendications 6 à 9, **caractérisé en ce que** les dispositifs de support sont conçus avec des longueurs fixes.

11. Système de positionnement selon l'une quelconque des revendications 6 à 10, **caractérisé en ce que** le dispositif de support, du côté de l'outil, comporte une surface complémentaire au contour de la pièce à traiter sur le support de celle-ci.

12. Système de positionnement selon l'une quelconque des revendications 6 à 11, **caractérisé en ce que** le dispositif de support est conçu pour pouvoir être assemblé à un dispositif de serrage de la pièce à traiter.

13. Système de positionnement selon l'une quelconque des revendications 6 à 12, **caractérisé en ce que** le coupleur comprend :
- une première pièce de couplage avec guidage central pour une pièce à coupler, un manchon en forme de fourreau et une butée pour un assemblage du manchon avec la pièce à coupler,
- une deuxième pièce de couplage avec un arbre central et un adaptateur librement mobile en rotation autour de celui-ci sur 360° et pouvant être bloqué, destiné à un assemblage avec un dispositif ou une machine,
- ainsi qu'un joint articulé intermédiaire destiné à assembler de manière à pouvoir pivoter les pièces de couplage, muni d'un dispositif de blocage pour bloquer les pièces de couplage en formant l'un par rapport à l'autre un angle relatif dans le domaine de +/- 90° environ.

14. Système de positionnement selon l'une quelconque des revendications 6 à 13, **caractérisé en ce que** le manchon et/ou l'adaptateur sont conçus sous forme de fourreau destiné à recouvrir les pièces à coupler, le manchon pouvant se déplacer parallèlement à l'axe du guidage central et l'adaptateur étant conçu pour pouvoir tourner par rapport au guidage.

15. Système de positionnement selon l'une quelconque des revendications 6 à 13, **caractérisé en ce qu'**au moins une des pièces de couplage est conçue sous forme de moteur pas à pas ou servomoteur, qui peut tourner sur une valeur angulaire prédéfinissable.
